# EUROPEAN PATENT APPLICATION

(11) **EP 3 328 073 A1**
(43) Date of publication of application: **30.05.2018**
(21) Application number: 16827686.3
(22) Date of filing: 13.07.2016
(51) Int. Cl.: H04N 5/91, H04N 5/225, H04N 5/232, H04N 21/234, H04N 21/2743

(54) **IMAGE MANAGEMENT SYSTEM, IMAGE MANAGEMENT METHOD AND PROGRAM**

(30) Priority: 21.07.2015 JP 2015144098
(71) Applicant: Ricoh Company, Ltd., Tokyo 143-8555 (JP)
(72) Inventor: TANEICHI, Satoshi, Tokyo 104-6042 (JP); WAKAMATSU, Kazunori, Tokyo 104-6042 (JP); MAEHANA, Tsuyoshi, Tokyo 104-6042 (JP)
(74) Representative: Watkin, Timothy Lawrence Harvey
(86) International application number: PCT/JP2016/070681
(87) International publication number: WO 2017/014126

(57) **Abstract**

An image management system includes a communication terminal and an image management apparatus that communicates with the communication terminal via a network. The image management system receives image data including a parameter that specifies an area of a part of an image, and generates thumbnail image data with a predetermined shape from an image of the area specified by the parameter.

## Description

### BACKGROUND OF THE INVENTION

### 1. Field of the Invention

The present invention relates to an image management system, an image management method, and a program.

### 2. Description of the Related Art

In recent years, image data captured by a digital camera, or the like, is uploaded by a user to a server on the Internet. With respect to the above, a system is provided that enables another user to download the image data from the server, and thus, multiple users share the same image (refer to Patent Document 1).

### [Citation List]

### [Patent Document]

[Patent Document 1] Japanese Unexamined Patent Application Publication No. 2011-120201

### SUMMARY OF THE INVENTION

### [TECHNICAL PROBLEM]

However, in the conventional method, there is a case in which flexible image processing, such as generating a thumbnail image, etc., with a predetermined shape, is not enabled.

In view of the above problem, an object of the present invention is to provide an image management system that enables flexible image processing such as generating a thumbnail image, etc., with a predetermined shape.

### [SOLUTION TO PROBLEM]

An image management system according to an aspect of the present invention is provided. The image management system includes a communication terminal and an image management apparatus that communicates with the communication terminal via a network, and includes a reception unit configured to receive image data including a parameter that specifies an area of a part of the image; and a thumbnail image data generation unit configured to generate thumbnail image data with a predetermined shape based on the parameter.

### [ADVANTAGEOUS EFFECTS OF INVENTION]

According to an embodiment of the present invention, it is possible to provide an image management system that enables flexible image processing such as generating a thumbnail image, etc., with a predetermined shape.

### BRIEF DESCRIPTION OF THE DRAWINGS

Fig. 1 is a drawing illustrating an example of an overall structure of an image management system according to an embodiment of the present invention.
Fig. 2A is a drawing illustrating an example of an appearance of an imaging apparatus according to an embodiment of the present invention.
Fig. 2B is another drawing illustrating an example of an appearance of an imaging apparatus according to an embodiment of the present invention.
Fig. 2C is another drawing illustrating an example of an appearance of an imaging apparatus according to an embodiment of the present invention.
Fig. 3 is a drawing illustrating a use example of the imaging apparatus.
Fig. 4A is a drawing illustrating an example of an image captured and generated by the imaging apparatus.
Fig. 4B is another drawing illustrating an example of an image captured and generated by the imaging apparatus.
Fig. 4C is a drawing illustrating an example of an image captured and generated by the imaging apparatus.
Fig. 5A is a drawing illustrating an example of an image for sharing selection according to an embodiment of the present invention.
Fig. 5B is another drawing illustrating an example of an image for sharing selection according to an embodiment of the present invention.
Fig. 6 is a drawing illustrating an example of a list for selecting the image for sharing selection.
Fig. 7 is a drawing illustrating an example of an overall process performed by an imaging apparatus, etc., according to an embodiment of the present invention.
Fig. 8 is a drawing illustrating an example of a full spherical panoramic image (all celestial sphere panoramic image) generated by the imaging apparatus.
Fig. 9 is a drawing illustrating an example of a parameter generated by the imaging apparatu, etc.
Fig. 10 is a drawing illustrating an example of a predetermined area according to an embodiment of the present invention.
Fig. 11 is a drawing illustrating an example of a direction parameter according to an embodiment of the present invention.
Fig. 12 is a drawing illustrating an example of an elevation angle parameter according to an embodiment of the present invention.
Fig. 13 is a drawing illustrating an example of a field-of-view parameter according to an embodiment of the present invention.
Fig. 14 is a drawing illustrating an example of a position parameter according to an embodiment of the present invention.
Fig. 15A is a drawing illustrating an example of a predetermined area specified by parameters according to an embodiment of the present invention.
Fig. 15B is a drawing illustrating a predetermined area used for a second image.
Fig. 16 is a drawing illustrating an example of determination of a thumbnail image according to an embodiment of the present invention.
Fig. 17A is a drawing illustrating an example of a display according to an embodiment of the present invention.
Fig. 17B is another drawing illustrating an example of a display according to an embodiment of the present invention.
Fig. 18 is a drawing illustrating a display example of a thumbnail image according to an embodiment of the present invention.
Fig. 19 is a drawing illustrating an example of an image displayed by a communication terminal according to an embodiment of the present invention.
Fig. 20 is a block diagram illustrating an example of a hardware structure of an imaging apparatus according to an embodiment of the present invention.
Fig. 21 is a block diagram illustrating an example of a hardware structure of a communication terminal according to an embodiment of the present invention.
Fig. 22 is a block diagram illustrating an example of a hardware structure of a server according to an embodiment of the present invention.
Fig. 23 is a functional block diagram illustrating an example of functional structures of an image management system, etc., according to an embodiment of the present invention.
Fig. 24 is a sequence diagram illustrating an example of processes of uploading, etc., performed by an image management system according to an embodiment of the present invention.
Fig. 25 is a sequence diagram illustrating an example of a process for uploading thumbnail image data to a second server.
Fig. 26 is a sequence diagram illustrating an example of a process of downloading to the second communication terminal.

### DETAILED DESCRIPTION OF THE PREFERRED EMBODIMENTS

In the following, an embodiment of the present invention will be described while making reference to the drawings. It should be noted that, in the present specification and the drawings, the same reference numeral is given to identical elements having substantially the same functional structure, and duplicated descriptions will be omitted.

### <<Outline of embodiment>>

First, an example of an overall structure of an image management system according to an embodiment of the present invention will be described.

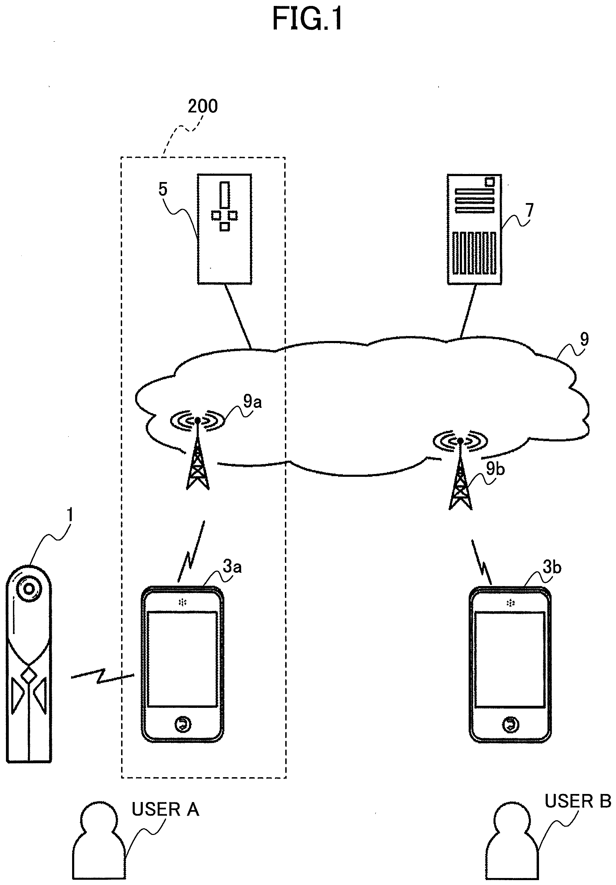

Fig. 1 is a drawing illustrating an example of an overall structure of an image management system 200 according to an embodiment of the present invention. As illustrated in the figure, the image management system 200 includes a first communication terminal 3a and a first server 5 as an example of an image management apparatus. The first communication terminal 3a and the first server 5 are connected to each other via a network 9. Further, the network 9 includes base stations, such as a first base station 9a and a second base station 9b.

Further, a second communication terminal 3b and a second server 7 are each connected to the image management system 200 via the network 9. Furthermore, an imaging apparatus 1 is connected to the first communication terminal 3a. It should be noted that apparatuses other than those illustrated in the figure may be further connected to the image management system 200. Further, in the following descriptions, a given communication terminal of a plurality of communication terminals may be referred to as a "communication terminal 3".

In Fig. 1, it is assumed that the first communication terminal 3a and the imaging apparatus 1 are operated by a first user USER A, and the second communication terminal 3b is operated by a second user USER B.

The imaging apparatus 1 is a digital camera for capturing a full spherical panoramic image. It should be noted that the imaging apparatus 1 may be a conventional digital camera for capturing an image other than a full spherical panoramic image. Furthermore, the imaging apparatus 1 and the first communication terminal 3a may be integrated as a unit. In the following, an example will be described in which the imaging apparatus 1 is a digital camera for capturing a full spherical panoramic image.

The communication terminal 3 is a computer including a smart-phone, a tablet terminal, a notebook PC, a desk-top PC, or a PDA (Personal Data Assistance). Further, the first server 5 and the second server 7 are each computers such as a server.

Further, the imaging apparatus 1 is enabled to communicate with the communication terminal 3 by using short distance radio technologies based on, for example, NFC (Near Field Communication) standards, Bluetooth (registered trademark), Wi-Fi (Wireless Fidelity), or a combination thereof. Further, the communication terminal 3 is enabled to communicate with the first server 5 and the second server 7 via the network 9. The network 9 includes, for example, the first base station 9a and the second base station 9b and are realized by a wireless communication network including 3G (3rd Generation), WiMAX (Worldwide Interoperability for Microwave Access), or LTE (Long Term Evolution), the Internet, or a combination thereof. It should be noted that wired communications may be performed between the imaging apparatus 1 and the communication terminal 3, and between the communication terminal 3 and the network 9, respectively.

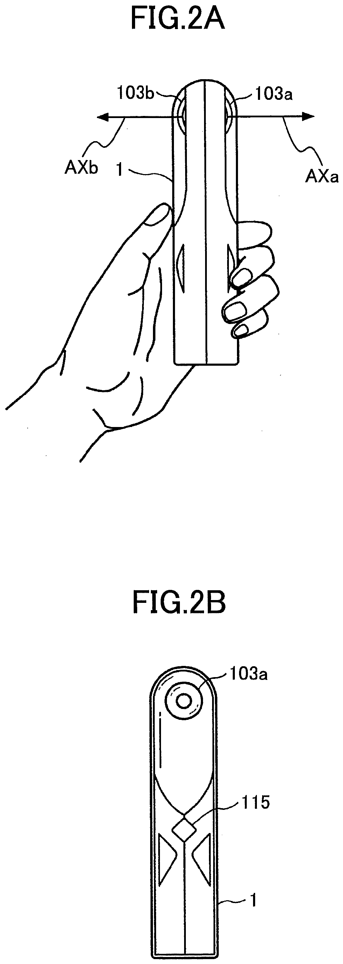

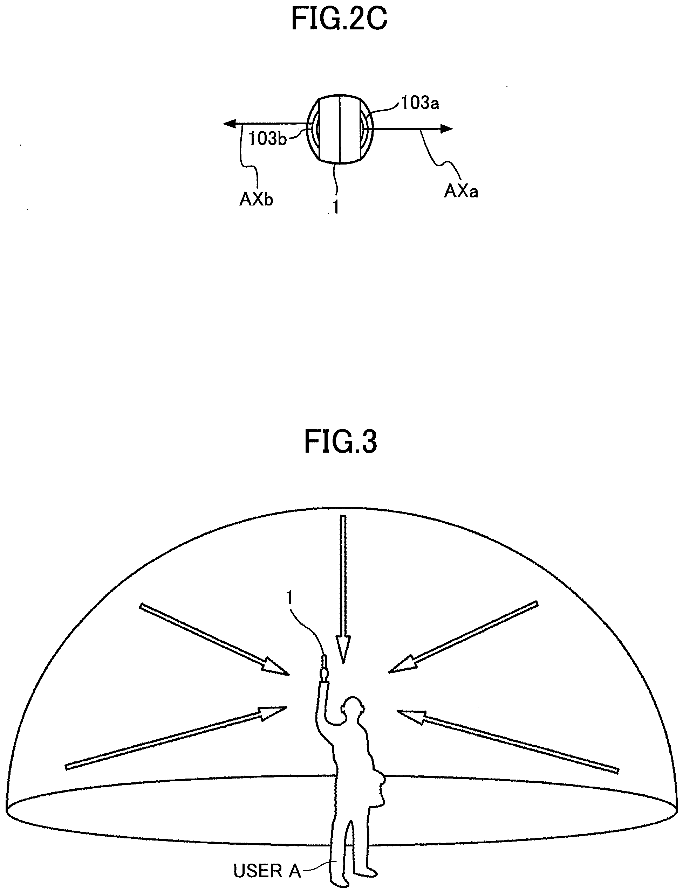

Fig. 2A through Fig. 2C are drawings illustrating examples of an appearance of an imaging apparatus 1 according to an embodiment of the present invention. It should be noted that Fig. 2A is a left side view of the imaging apparatus 1, Fig. 2B illustrates a front view, and Fig. 2C illustrates a plan view.

As illustrated in Fig. 2A, the imaging apparatus 1 is sized such that a person can hold it with a single hand. Further, as illustrated in Fig. 2A, Fig. 2B, and Fig. 2C, in the upper portion of the imaging apparatus 1, an imaging element 103a is included on the front side and an imaging element 103b is included on the rear side (back side). Further, as illustrated in Fig. 2B, on the front side of the imaging apparatus 1, an operation unit 115 such as a shutter button is included.

It should be noted that, in the following descriptions, as illustrated in the figures, an optical axis of the imaging element 103a is referred to as AXa, and an optical axis of the imaging element 103b is referred to as AXb.

Fig. 3 is a drawing illustrating a use example of an imaging apparatus 1 according to an embodiment of the present invention. As illustrated in Fig. 3, a first user USER A holds the imaging apparatus 1 in hand. When the first user USER A presses an operation unit 115 (Fig. 2B), the imaging apparatus 1 captures an image of objects surrounding the first user USER A. In this case, each of the imaging element 103a and the imaging element 103b illustrated in Figs. 2A-2C captures an image, and thus, it is possible for the imaging apparatus 1 to capture two hemispherical images. In the following descriptions, as illustrated in Fig. 3, it is assumed that a position where the first user USER A captures an image is defined as an origin, and that the captured image is a 360-degree image indicating 360 degrees in the horizontal direction.

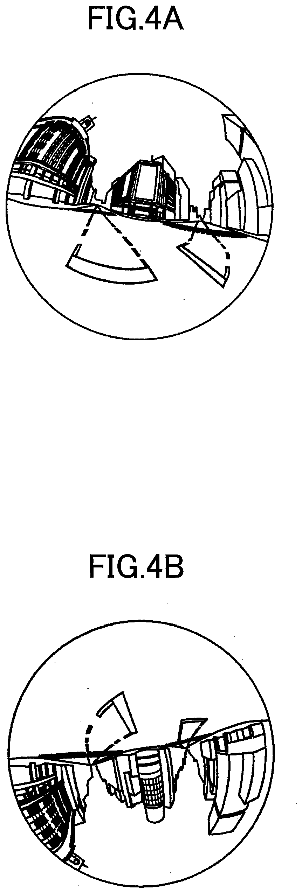

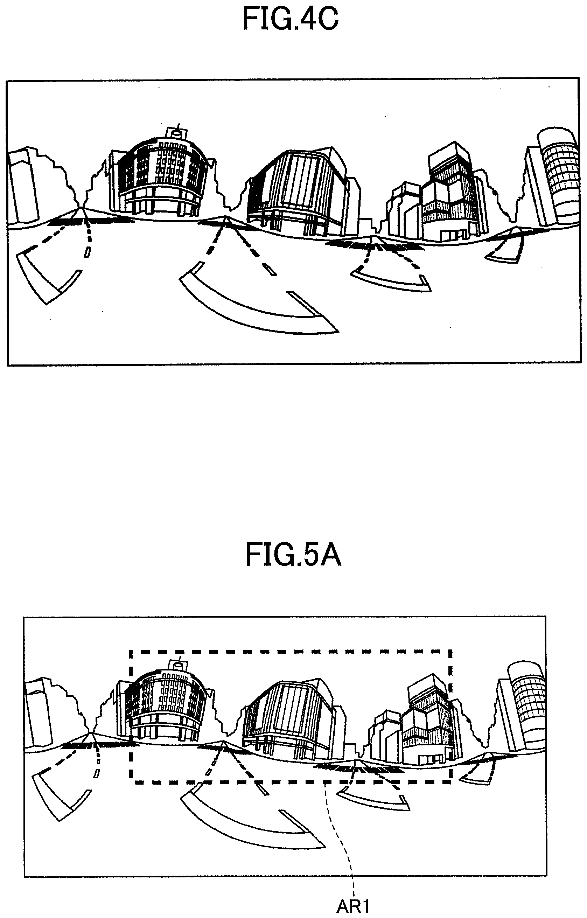

Fig. 4A through Fig. 4C are drawings illustrating examples of images captured and generated by the imaging apparatus 1. Specifically, Fig. 4A is an example of a hemispherical image captured by the imaging element 103a included in the front side. Further, Fig. 4B is an example of a hemispherical image captured by the imaging element 103b included in the rear side (back side). Further, Fig. 4C illustrates an example of an image (hereinafter, referred to as a "Mercator image") generated by combining the images illustrated in Fig. 4A and Fig. 4B by using Mercator projection. In the following, an example of a Mercator image illustrated in Fig. 4C will be described.

The imaging element 103a uses a lens for capturing a wide-angle range, such as a fish-eye lens. Therefore, as illustrated in Fig. 4A, a hemispherical image captured by the imaging element 103a is a curved image due to distortion aberration. Similarly, the imaging element 103b also uses a lens for capturing a wide-angle range, such as a fish-eye lens. Therefore, similar to Fig. 4A, as illustrated in Fig. 4B, a hemispherical image captured by the imaging element 103b is a curved image due to distortion aberration. Further, the hemispherical image captured by the imaging element 103a and the hemispherical image captured by the imaging element 103b are combined by the imaging apparatus 1, and thus, a Mercator image illustrated in Fig. 4C is generated.

Fig. 5A is a drawing illustrating an example of an image for sharing selection according to an embodiment of the present invention.

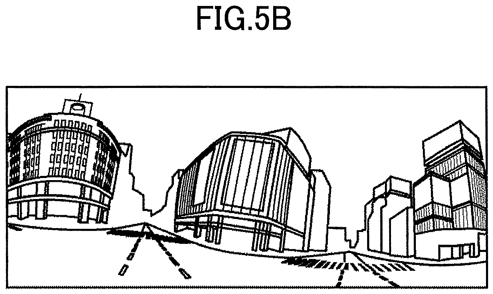

Fig. 5B is an example of an image used by a user for selecting an image (hereinafter, referred to as "an image for sharing selection"). It should be noted that the image for sharing selection is an image transmitted from the imaging apparatus 1 (Fig. 1) to the first communication terminal 3a (Fig. 1). The image for sharing selection is generated from a Mercator image.

Specifically, it is assumed that, as illustrated in Fig. 5A, a range AR1 of a part of the Mercator image illustrated in Fig. 4C is selected. In this case, the image illustrated in Fig. 5B is an example of an image for sharing selection indicating the range AR1 of the image illustrated in Fig. 5A.

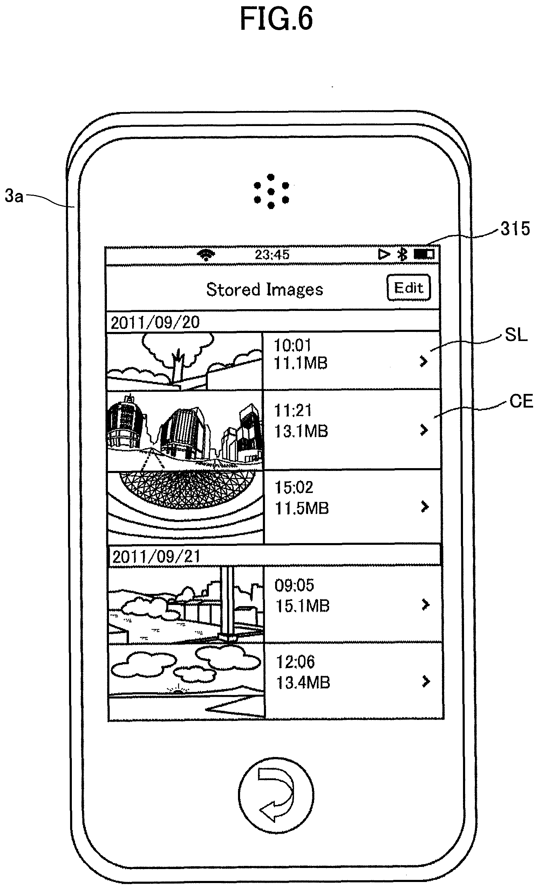

Fig. 6 is a drawing illustrating an example of a list for selecting an image for sharing selection according to an embodiment of the present invention. When an image for sharing selection CE illustrated in Fig. 5B is transmitted from the imaging apparatus 1 (Fig. 1) to the first communication terminal 3a, the first communication terminal 3a displays a list in which, for example, other images for sharing selection and the image for sharing selection CE are listed. The list has a form of an image list SL, etc., illustrated, for example, in Fig. 6.

Fig. 6 illustrates an example in which the image list SL is displayed on a display 315 included in the first communication terminal 3a. In this example, the image for sharing selection CE illustrated in Fig. 5B is displayed as one of the images indicated by the image list SL. Further, as illustrated in the figure, information related to the image for sharing selection CE is displayed in the image list SL. In this example, the date and time "2011/09/20 11:21", when the image for sharing selection CE was captured, is displayed as the information related to the image for sharing selection CE.

### <<Overall process example>>

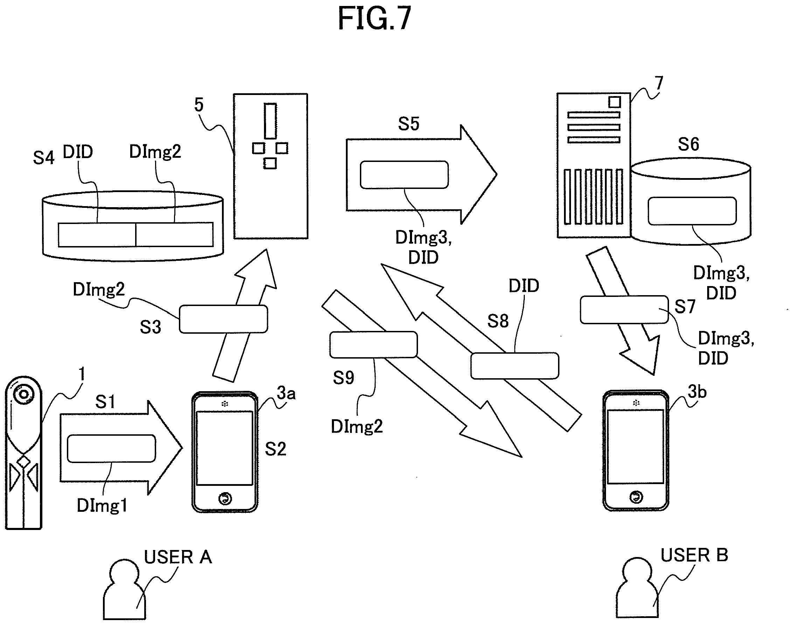

Fig. 7 is a drawing illustrating an example of an overall process performed by an imaging apparatus, etc., according to an embodiment of the present invention. In the following, descriptions will be provided by referring to an example in which the overall process is performed by apparatuses such as an imaging apparatus included in the image management system and by connected apparatuses in the case where the image for sharing selection CE is selected from the image list SL illustrated in Fig. 6.

In step S1, when the image for sharing selection CE is selected in the image list SL, the first communication terminal 3a obtains an original image from the imaging apparatus 1. It should be noted that the original image is, for example, each of the hemispherical images DImg1 illustrated in Fig. 4A and Fig. 4B.

In step S2, first, the first communication terminal 3a generates a full spherical panoramic image. Specifically, the first communication terminal 3a generates a Mercator image illustrated in Fig. 4C, generated from the hemispherical images DImg1. Next, based on the Mercator image, the first communication terminal 3a generates a full spherical panoramic image by using OpenGL ES (registered trademark) (Open Graphics Library for Embedded Systems), or the like. The OpenGL ES (registered trademark) is an example of a graphics library used for visualizing two-dimensional data and three-dimensional data. In this example, the full spherical panoramic image is generated by having the Mercator image illustrated in Fig. 4C pasted on a stereosphere.

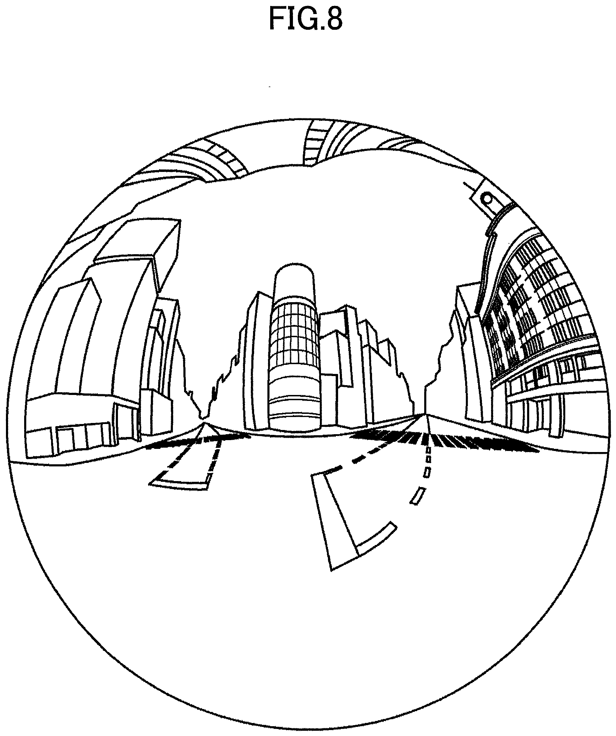

Fig. 8 is a drawing illustrating an example of a full spherical panoramic image (all celestial sphere panoramic image) generated by an imaging apparatus according to an embodiment of the present invention. Fig. 8 is an example of a full spherical panoramic image generated based on the Mercator image illustrated in Fig. 4C. It should be noted that the full spherical panoramic image is a video image or a still image.

Next, in step S2 (Fig. 7), the first communication terminal 3a generates parameters for specifying an area of a part of the image The parameters may be generated in a form of, for example, "Photo Sphere (registered trademark) XMP Metadata". Further, when the parameters are generated in a form of the "Photo Sphere (registered trademark) XMP Metadata", the parameters are defined according to the standards, and thus, the parameters can be used by many software applications.

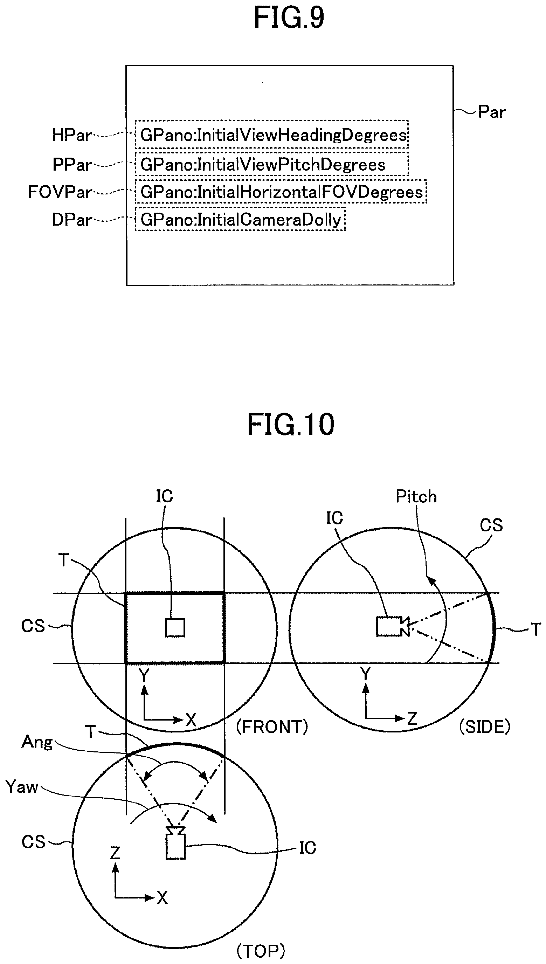

Fig. 9 is a drawing illustrating examples of the parameters Par. In the following, an example will be described in which the parameters are generated by a communication terminal. The parameters Par includes, as illustrated in the figure, a direction parameter HPar indicating a (Heading) direction, an elevation angle parameter PPar indicating an elevation angle (Pitch), a field-of-view parameter FOVPar indicating a field of view, and a position parameter DPar indicating a camera position. When each of the parameters included in the parameters Par is defined, a predetermined area in the full spherical panoramic image can be specified. In the following, the specified area is referred to as a "predetermined area", whose position, etc., in the full spherical panoramic image will be described.

Fig. 10 is a drawing illustrating an example of the predetermined area according to an embodiment of the present invention. Fig. 10 illustrates an example of a case in which the full spherical panoramic image is a 3D stereosphere CS. It should be noted that Fig. 10 illustrates a front view for the imaging element 103a (Fig. 1), a side view in which the imaging element 103a is viewed from the side, and a plan view in which the imaging element 103a is viewed from above. Further, in the following descriptions, an optical axis AXa of the imaging element 103a, that is, a depth direction, is referred to as "Z axis", a right-and-left direction with respect to the Z axis, that is, a horizontal direction, is referred to as "X axis", and an up-and-down direction with respect to the Z axis, that is, a vertical direction, is referred to as "Y axis".

Further, in Fig. 10, a virtual camera IC corresponds to a point-of-view of a user for the panoramic image displayed as a stereosphere CS. In other words, when it is assumed that the full spherical panoramic image is the stereosphere CS, as illustrated in the figure, the virtual camera IC is positioned at the center of the stereosphere CS. When the virtual camera IC rotates in the up-and-down direction (Pitch (PPar)), in the left-and-right direction (Yaw (HPar)), or around the optical axis (Roll), a predetermined area T moves. Further, when the virtual camera IC moves in parallel with any of the X axis, Y axis, and the Z axis, the predetermined area T moves. When the predetermined area T moves, a displayed place of the full spherical panoramic image changes, and thus, an image generated based on the predetermined area T changes.

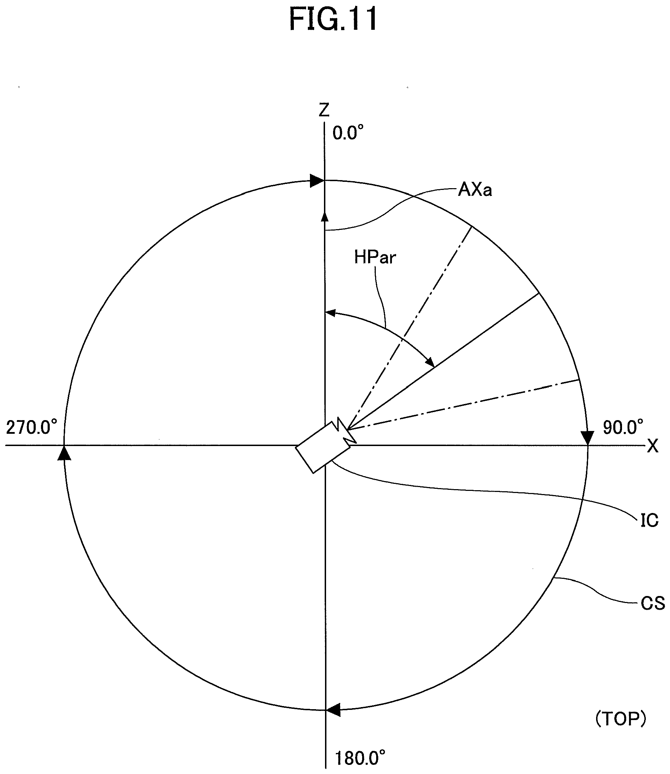

Fig. 11 is a drawing illustrating an example of a direction parameter according to an embodiment of the present invention. It should be noted that Fig. 11 is a drawing corresponding to the plan view illustrated in Fig. 10. As illustrated in the figure, the direction parameter HPar is a parameter indicating a left-and-right rotation amount, or a rotation amount related to what is termed as a "Yaw direction". For example, it is assumed that an angle that matches the optical axis AXa of the imaging element 103a is "0.0 degrees" of the direction parameter HPar, or an origin. In other words, for example, the virtual camera IC is rotated in the Yaw direction in Fig. 10 as the value of the direction parameter HPar increases. According to the above, the predetermined area T is also rotated (moved) in the Yaw direction. Therefore, when the direction parameter HPar is set, the "direction" of the virtual camera IC can be specified.

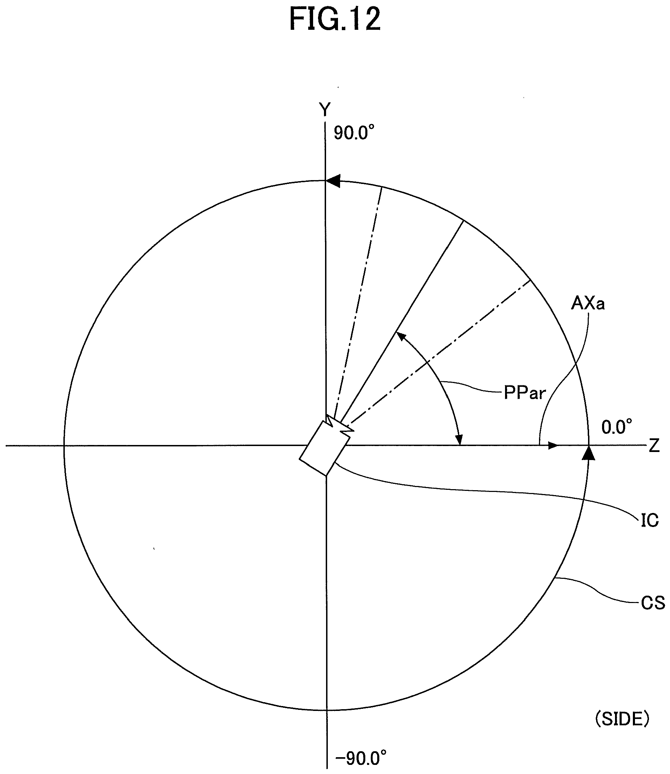

Fig. 12 is a drawing illustrating an example of an elevation angle parameter according to an embodiment of the present invention. It should be noted that Fig. 12 is a drawing corresponding to the side view illustrated in Fig. 10. As illustrated in the figure, the elevation angle parameter PPar is a parameter indicating an up-and-down rotation amount, or a rotation amount related to what is termed as a "Pitch direction". For example, it is assumed that an angle that matches the optical axis AXa of the imaging element 103a is "0.0 degrees" of the elevation angle parameter PPar, or an origin. In other words, for example, the virtual camera IC is rotated in the Pitch direction in Fig. 10 as the value of the elevation angle parameter PPar increases. According to the above, the predetermined area T is also rotated (moved) in the Pitch direction. Therefore, when the elevation angle parameter PPar is set, the "elevation angle" of the virtual camera IC can be specified.

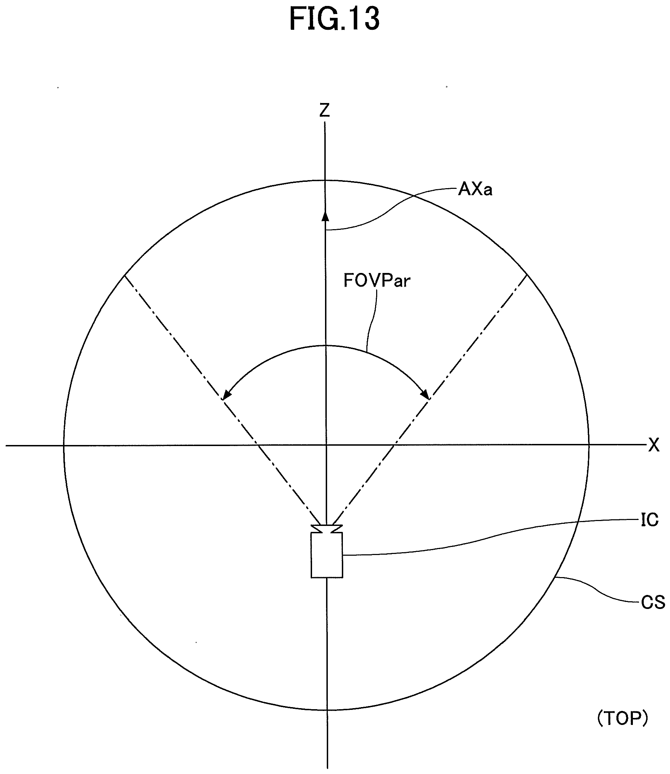

Fig. 13 is a drawing illustrating an example of a field-of-view parameter according to an embodiment of the present invention. It should be noted that Fig. 13 is a drawing corresponding to the plan view illustrated in Fig. 10. As illustrated in the figure, the field-of-angle parameter FOVPar is a parameter indicating a predetermined area corresponding to an area displayed in the image. For example, it is assumed that an even field of angle is set between in the left direction and in the right direction with respect to the optical axis AXa of the imaging element 103a as the center. In other words, for example, when the value of the field-of-angle parameter FOVPar increases, a field-of-angle Ang illustrated in Fig. 10 becomes wider and a range corresponding to the predetermined area T becomes larger. Therefore, when the field-of-angle parameter FOVPar is set, the "field of angle" of the virtual camera IC can be specified.

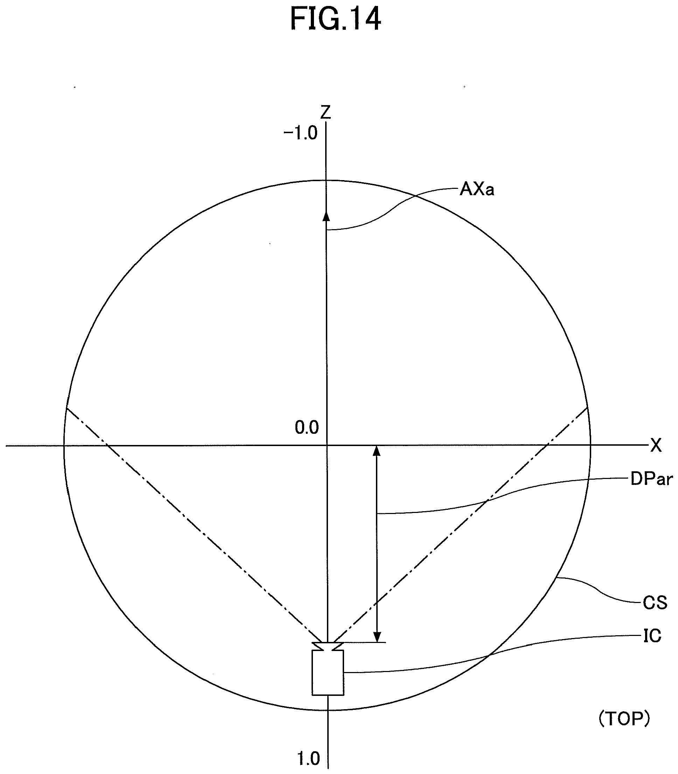

Fig. 14 is a drawing illustrating an example of a position parameter according to an embodiment of the present invention. It should be noted that Fig. 14 is a drawing corresponding to the plan view illustrated in Fig. 10. As illustrated in the figure, the position parameter DPar is a parameter indicating a position of the virtual camera IC. For example, it is assumed that the center of the stereosphere CS is "0.0" of the position parameter DPar, or an origin. Further, it is assumed that a radius of the stereosphere CS is "1.0". The position parameter DPar indicates a distance from the origin. In other words, for example, when the value of the position parameter DPar increases, the virtual camera IC moves on Z axis and moves to a position away from the origin indicated by "0.0" in Fig. 14. Therefore, when the position parameter DPar is set, the "position" of the virtual camera IC can be specified.

It should be noted that it is not necessary that each of the parameters has the optical axis AXa of the imaging element 103a as an origin. The origin for each of the parameters may be freely selected.

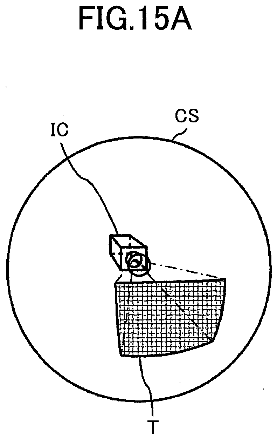

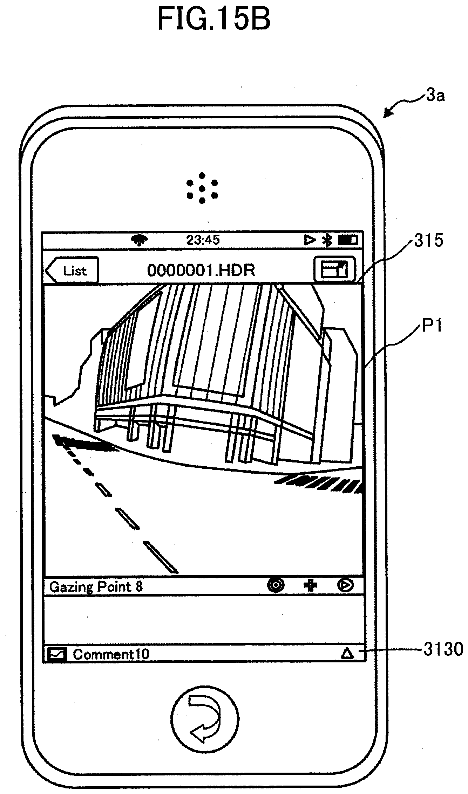

Fig. 15A and Fig. 15B are drawings illustrating examples of a predetermined area specified by parameters according to an embodiment of the present invention. When a certain point of the full spherical panoramic image is determined, it is possible for the first communication terminal to calculate each of a direction, an elevation angle, a field of view, and a position of the virtual camera which indicate the point. It is assumed that a place corresponding to the predetermined area T of the full spherical panoramic image is cut out as an image and the image is displayed on the display 315 included in the first communication terminal 3a as illustrated in Fig. 15B. Further, the image displayed by the first communication terminal 3a in Fig. 15B is referred to as a "first image P1". It should be noted that Fig. 15B illustrates an example in which a comment display area 3130 is displayed that is a GUI (Graphical User Interface) used by a user to input a comment.

For example, the first user USER A (Fig. 1) selects a range the first user USER A wants to display as a thumbnail image by operating the range on the first communication terminal 3a. Specifically, in the case where a touch panel is included in the first communication terminal 3a, the first user USER A performs an operation by touching a surface of the display 315 with fingers. Next, the first communication terminal 3a moves the predetermined area T according to the finger movement detected by the touch panel, and cuts out a place corresponding to the moved predetermined area T as an image and displays the place (image) on the display 315. In this case, the first communication terminal 3a changes a display image from the first image P1. It should be noted that, in the case where the first communication terminal 3a is an information processing apparatus such as a PC, the first user USER A may perform an operation by using, not a touch panel, but an input device such as a mouse.

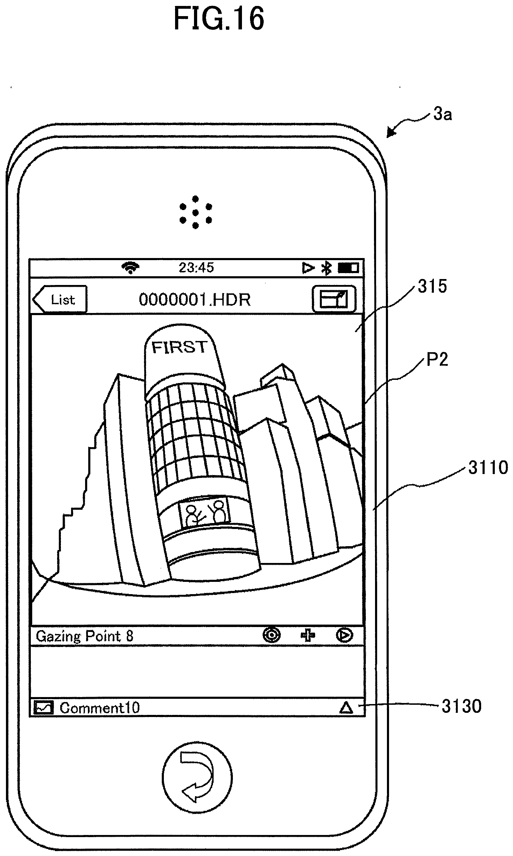

Fig. 16 is a drawing illustrating an example of determination of a thumbnail image according to an embodiment of the present invention. For example, an example will be described in which an illustrated image (hereinafter, referred to as a "second image P2") is determined to be a thumbnail image. In this case, when the second image P2 is displayed according to an operation of the first user USER A, an area indicated by the second image P2 of the full spherical panoramic image is determined to be a thumbnail image. Next, the first communication terminal 3a calculates a value of each of the parameters specifying a predetermined area T corresponding to the second image P2 (Fig. 15A). In other words, the first communication terminal 3a calculates each of values of the "direction", the "elevation angle", etc., specifying a range used for (corresponding to) the second image P2. Next, the first communication terminal 3a generates the parameters illustrated in Fig. 9 by incorporating the calculated values.

Referring back to Fig. 7, in step S3, the first communication terminal 3a transmits image data DImg2 to a first server 5. It is assumed that the image data DImg2 is data indicating the Mercator image illustrated in Fig. 4C. Further, in the image data DImg2, the parameters Par generated in step S2 and illustrated in Fig. 9 are included.

In step S4, the first server 5 generates thumbnail image data DImg3. Because the parameters Par are included in the image data DImg2 transmitted in step S3, the first server 5 is enabled to cut out an area used for the thumbnail image from the Mercator image. It should be noted that it is possible for the first server 5 to generate the thumbnail image with a predetermined shape. For example, it is possible for the first server 5 to generate the thumbnail image with a square shape. In the following, an example will be described in which the shape of the thumbnail image is square.

The first server 5 determines the shape of the thumbnail image based on, for example, the size of the display included in the communication terminal.

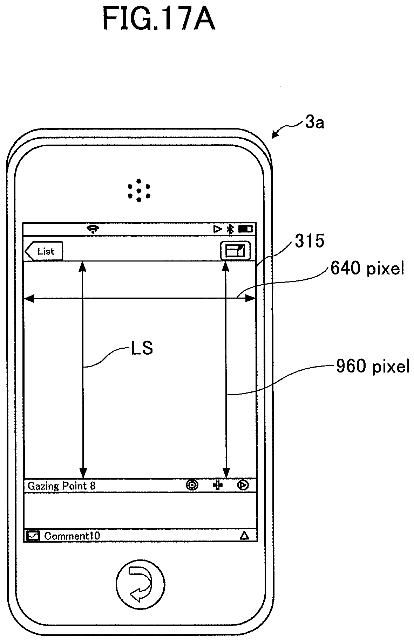

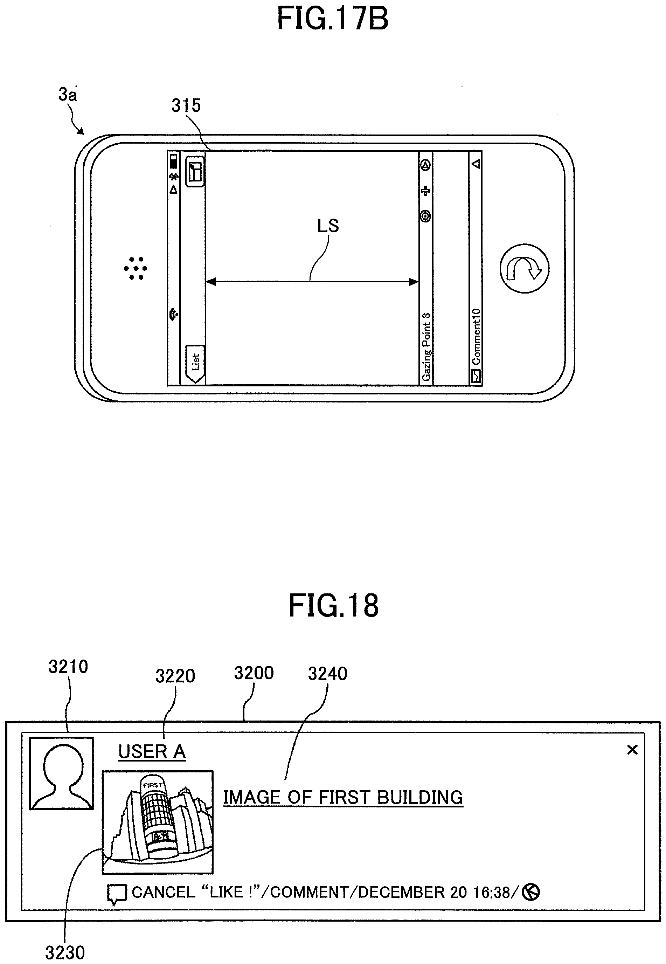

Fig. 17A and Fig. 17B are drawings illustrating examples of a display according to an embodiment of the present invention. For example, the shape of the thumbnail image is determined based on the size of the display 315 included in the first communication terminal 3a. Specifically, the first server 5 determines one side of the thumbnail based on a length of the display 315 in the longitudinal direction, etc., (hereinafter, referred to as a "long side LS"). When the thumbnail image is generated based on the long side LS, etc., a range indicated by the second image P2 (Fig. 16) is included in the thumbnail image. In other words, the first server 5 is enabled to generate the thumbnail image in such a way that the range determined by the first user USER A is included in the thumbnail image.

It should be noted that, of a lateral-direction side and a longitudinal-direction side that form the display 315 included in the first communication terminal 3a, the long side LS is the one whose number of pixels is greater than the other. For example, in the first communication terminal 3a oriented as illustrated in Fig. 17A, the long side LS is a side in the up-and-down direction in the figure. Specifically, when it is assumed that the display 315 is 960 pixels in the up-and-down direction and 640 pixels in the left-and-right direction, the long side LS is a side of 960 pixels in the up-and-down direction. Therefore, for example, in the case where the first communication terminal 3a is used by being oriented (headed) as illustrated in Fig. 17B, the long side LS is a side in the left-and-right direction in the figure.

Referring back to Fig. 7, in step S4, the first server 5 generates image ID data DID, etc., used for identifying the image data DImg2 indicated by the thumbnail image data DImg3. In this case, the first server 5 associates the image data DImg2, the thumbnail image data DImg3, and the image ID data DID with each other, and manages (stores and maintains) the associated result. In other words, when an ID indicated by the image ID data DID is identified, it is possible for the first server 5 to identify a specific image data item DImg2 of the stored multiple image data items DImg2.

In step S5, the server 5 transmits the thumbnail image data DImg3 and the image ID data DID to a second server 7.

In step S6, the second server 7 manages (stores and maintains) the thumbnail image data DImg3 and the image ID data DID received in step S6.

Further, when the second communication terminal 3b is connected to the second server 7 according to an operation by the second user USER B, in step S7, the second server 7 transmits the thumbnail image data DImg3 and the image ID data DID to the second communication terminal 3b. Next, the second communication terminal 3b displays the received thumbnail image data DImg3.

Fig. 18 is a drawing illustrating a display example of a thumbnail image according to an embodiment of the present invention. For example, the thumbnail image is displayed as illustrated by, for example, a display screen 3200. Specifically, in Fig. 18, the display screen 3200 includes a user image 3210 indicating the first user USER A (Fig. 1), a user name 3220, a thumbnail image 3230, and a comment 3240 indicating the first user USER A's comment. It should be noted that other thumbnail image data items may be further transmitted to the second communication terminal 3b, and the second communication terminal 3b may display multiple display screens 3200 in what is termed as a "list format". Further, the format in which the thumbnail images are displayed may not be limited to the format illustrated in Fig. 18. For example, the format may be such that multiple thumbnail images 3230 are lined up.

Referring back to Fig. 7, next, it is assumed that the second user USER B selects one thumbnail image from the multiple thumbnail images. In this case, in step S8, the second communication terminal 3b transmits image ID data DID of the selected thumbnail image to the first server 5. This operation means that the second communication terminal 3b has requested the first server 5 to transmit image data such as a Mercator image indicated by the thumbnail image.

Therefore, in step S9, the first server 5 transmits the image data DImg2 to the second communication terminal 3b. The second communication terminal 3b cuts out a specified range from an image of the received image data DImg2 based on the parameters included in the image data DImg2, and displays the cut-out image.

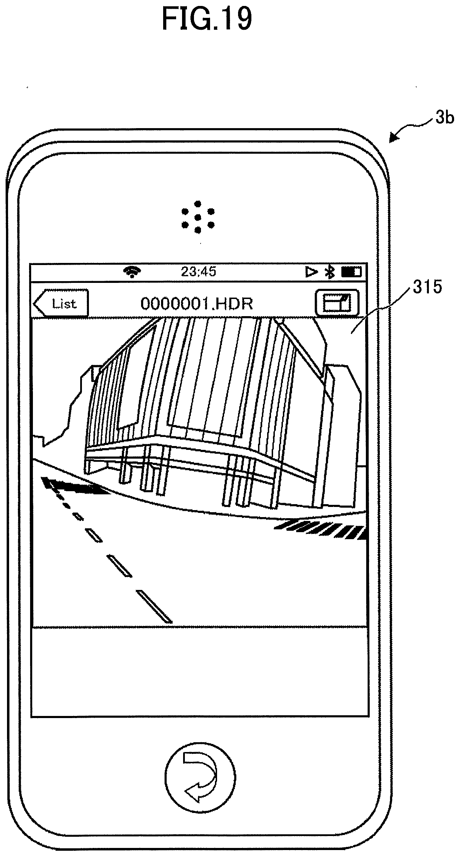

Fig. 19 is a drawing illustrating an example of an image displayed by a communication terminal according to an embodiment of the present invention. As illustrated in the figure, the second communication terminal 3b displays an image on the display 315 included in the second communication terminal 3b based on the received image data DImg2 (Fig. 7).

### <<Hardware structure example>>

In the following, hardware structure examples of respective apparatuses according to an embodiment of the present invention will be described.

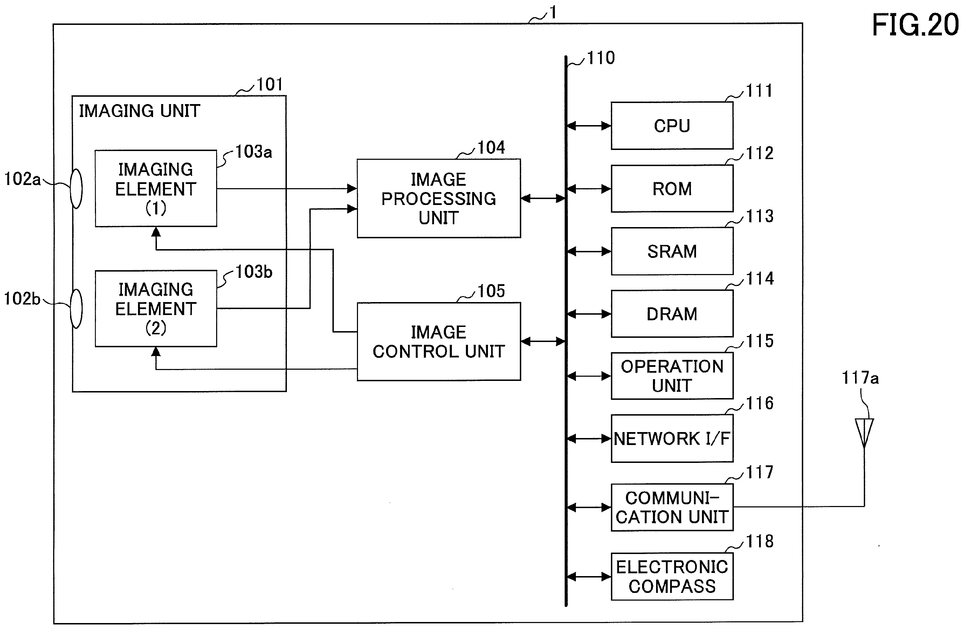

Fig. 20 is a block diagram illustrating an example of a hardware structure of an imaging apparatus according to an embodiment of the present invention. In the following, an example will be described in which the imaging apparatus 1 includes two imaging elements, and captures an image of what is termed as "all directions". It should be noted that the imaging apparatus 1 may include three or more imaging elements. Further, the imaging apparatus 1 is not limited to an imaging-dedicated apparatus. For example, the imaging apparatus 1 may be integrated with a smart-phone, etc., or may be an apparatus enabled to be attached to another apparatus such as a smart-phone.

As illustrated in the figure, the imaging apparatus 1 includes a imaging unit 101, an image processing unit 104, an imaging control unit 105, a CPU (Central Processing Unit) 111, a ROM (Read Only Memory) 112, etc. Further, the imaging apparatus 1 includes a SRAM (Static Random Access Memory) 113, a DRAM (Dynamic Random Access Memory) 114, etc. Furthermore, the imaging apparatus 1 includes an operation unit 115, a network I/F 116, a communication unit 117, an antenna 117a, etc.

In the above-described units, in order to capture hemispherical images, the imaging unit 101 includes wide angle lenses (what is termed as "fish-eye lenses") 102a and 102b with the field of view of 180 degrees or more. Further, the imaging unit 101 includes two imaging elements 103a and 103b provided for the corresponding wide angle lenses. Further, each of the imaging elements 103a and 103b is an image sensor that converts the light collected through the wide angle lens into an electrical signal and outputs the converted electrical signal. Specifically, the image sensor is a CMOS (Complementary Metal Oxide Semiconductor) sensor or a CCD (Charge Coupled Device) sensor, etc.

Further, each of the imaging elements 103a and 103b includes a timing signal generation circuit for generating a horizontal synchronization signal, a vertical synchronization signal, a pixel clock, etc., of the image sensor. Further, each of the imaging elements 103a and 103b includes a group of registers, or the like, in which various commands and parameters required for the operation of the imaging element are set.

The imaging elements 103a and 103b included in the imaging unit 101 are each connected to the image processing unit 104 via a parallel I/F bus, or the like. Separately, the imaging elements 103a and 103b are connected to the imaging control unit 105 via a serial I/F bus (I2C (registered trademark (Inter-Integrated Circuit) bus, etc.). Further, the image processing unit 104 and the imaging control unit 105 are each connected to the CPU 111 via a bus 110. Furthermore, the ROM 112, the SRAM 113, the DRAM 114, the operation unit 115, the network I/F 116, the communication unit 117, an electric compass 118, etc., are connected to the bus 110.

Image data output from each of the imaging elements 103a and 103b is input to the image processing unit 104 via the parallel I/F bus. Next, the image processing unit 104 applies predetermined processing to each image data. Next, the image processing unit 104 applies synthesis processing to the image data to which the above predetermined processing has been applied, and generates Mercator image data, or the like, illustrated in Fig. 4C.

For example, it is assumed that the imaging control unit 105 is a master device and the imaging elements 103a and 103b are slave devices. The imaging control unit 105 sets commands, or the like, in the group of registers included in the imaging elements 103a and 103b by using the I2C (registered trademark) bus. Further, necessary commands, etc., are input from the CPU 111. Furthermore, the imaging control unit 105 outputs status data, etc., of the group of registers included in the imaging elements 103a and 103b to the CPU 111 by using the I2C bus.

Further, the imaging control unit 105 instructs the imaging elements 103a and 103b to output the image data at the timing when the shutter button that is included in the operation unit 115 is pressed. It should be noted that the imaging apparatus may have a function corresponding to a preview display function or a video display function using a display. In this case, images corresponding to signals output from each of the imaging elements 103a and 103b are displayed as a video image with a predetermined frame rate.

Next, the imaging control unit 105 also functions as a synchronization control means for synchronizing with the CPU 111 for the output timing of the image data output by the imaging elements 103a and 103b. It should be noted that the imaging apparatus may have a display unit.

The CPU 111 controls overall operations of the imaging apparatus 1. Further, the ROM 112 stores various programs executed by the CPU 111. Furthermore, the SRAM 113 and the DRAM 114 are what are termed as "work memories", and stores the programs executed by the CPU 111 and data that is being processed. In particular, the DRAM 114 stores image data that is being processed by the image processing unit 104 and Mercator image data that has been processed.

The operation unit 115 includes various operation buttons, a power switch, a shutter button, a touch panel that has both a display function and an operation function, or a combination thereof. For example, a user inputs various imaging modes and imaging conditions to the imaging apparatus 1 by operating the operation buttons.

The network I/F 116 is an interface circuit (USB I/F, etc.,) for media such as an SD (registered trademark) card, or for an external apparatus such as a PC. Further, the network I/F 116 may be a wireless or wired network interface. Furthermore, the data such as Mercator images stored in the DRAM 114 is stored in the media or transmitted to an external apparatus, such as a communication terminal 3, via the network I/F 116.

The communication unit 117 performs communications via the antenna 117a included in the imaging apparatus 1. For example, the communication unit 117 communicates with an external apparatus, such as a communication terminal 3, by using a short distance wireless technology such as Wi-Fi (registered trademark) (wireless fidelity) or NFC (Near Field Communication). The imaging apparatus 1 is enabled to transmit the data, such as a Mercator image, to an external apparatus, such as a communication terminal 3, by using the communication unit 117.

The electric compass 118 calculates an azimuth and a tilt (Roll rotation amount) of the imaging apparatus 1 by using the Earth's magnetism, and outputs azimuth and tilt information. The azimuth and tilt information is an example of meta data in accordance with Exif (Exchangeable Image file format), etc., and is used for correction, etc., of the captured images. It should be noted that the meta data may include various data items such as a thumbnail of image data, a captured date and time of an image, a data size of the image data, etc.

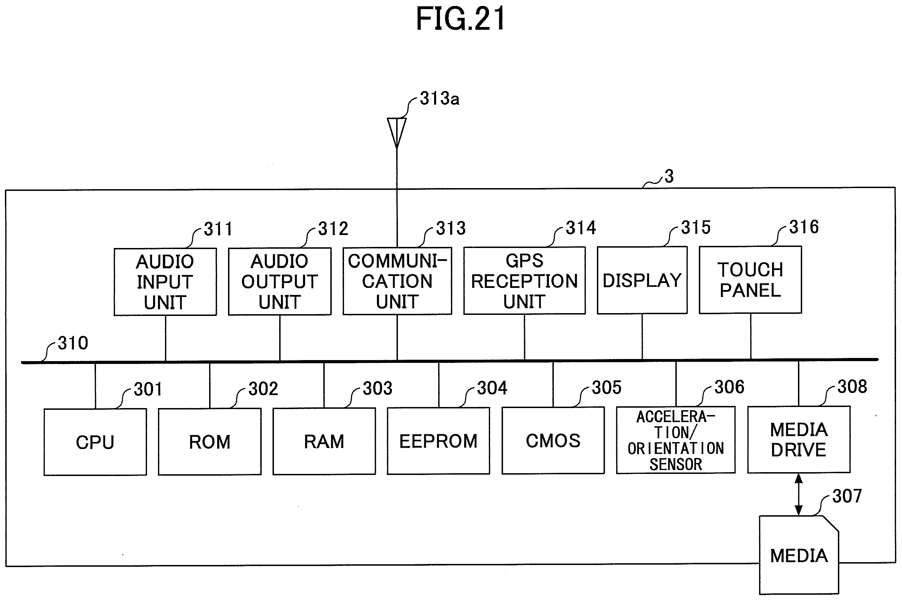

Fig. 21 is a block diagram illustrating an example of a hardware structure of a communication terminal 3 according to an embodiment of the present invention. It should be noted that Fig. 21 illustrates an example of a case where the communication terminal 3 is a smart-phone.

As illustrated in the figure, the communication terminal 3 includes a CPU 301 for controlling overall operations of the communication terminal 3, a ROM 302 for storing basic input/output programs, and a RAM (Random Access Memory) 303 used as a work area of the CPU 301. Further, the communication terminal 3 includes an EEPROM (Electrically Erasable and Programmable ROM) 304. The communication terminal 3 includes a CMOS sensor 305 that is an example of an imaging element that captures an image of an object and generates image data, an electronic magnetic compass that detects geomagnetism, various acceleration and azimuth sensors 306 including a gyro compass and an acceleration sensor, and a media drive 308 that controls data read and write (storage) of recording media 307, such as a flash memory. The recording media 307 may be attachable to and detachable from the media drive 308.

It should be noted that an operating system (OS) and other programs executed by the CPU 301 and various data items are stored in the EEPROM 304. Further, the CMOS sensor 305 may be a CCD sensor.

Furthermore, the communication terminal 3 includes an audio input unit 311 that converts audio to an audio signal, an audio output unit 312 that converts an audio signal to audio, an antenna 313a, and a communication unit 313 that communicates with a first base station 9a (Fig. 1) that will be the nearest base station, etc., by using wireless communications utilizing the antenna 313a. Further, the communication terminal 3 includes a GPS reception unit 314 that receives a GPS signal including position information (latitude, longitude, altitude, etc.,) of the communication terminal 3 according to a GPS (Global Positioning Systems) satellite or an IMES (Indoor MEssaging System) as an indoor GPS.

Furthermore, the communication terminal 3 includes a display 315 of a liquid crystal, an organic EL, etc., that displays an image of an object or various icons, and a touch panel 316 of a pressure sensitive type or electrostatic type that is arranged on the display 315. The touch panel 316 detects a touching position of a finger or a touch pen on the display 315 according to touch from a finger or a touch pen. Further, the communication terminal 3 includes a bus line 310 such as an address bus, a data bus, etc., used for electrically connecting the units to each other. It should be noted that the audio input unit 311 includes a microphone used for inputting audio, and the audio output unit 312 includes a speaker used for outputting audio.

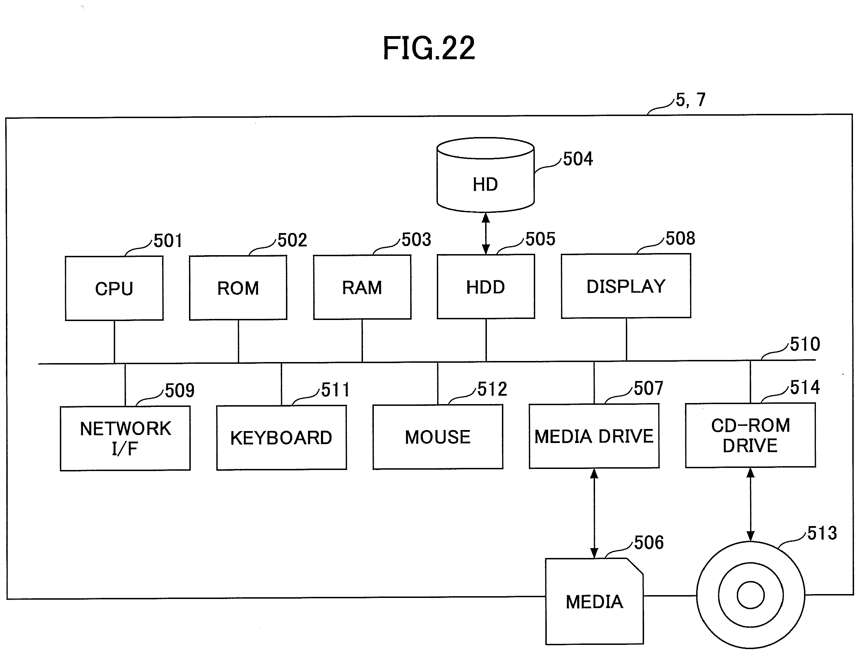

Fig. 22 is a block diagram illustrating an example of a hardware structure of a server according to an embodiment of the present invention. It should be noted that Fig. 22 illustrates an example of a hardware structure of a first server 5, a second server 7, or the like, that is an example of an image management apparatus. In the following, the first server 5 will be described as an example.

The first server 5 includes a CPU 501 that controls overall operations of the first server, a ROM 502 that stores programs, such as an IPL, used for driving the CPU 501, a RAM 503 used as a work area of the CPU 501, etc. Further, the first server 5 includes, for example, a HD 504 that stores various data items such as programs, and a HDD (Hard Disk Drive) 505 that controls reading of various data items from or writing of the various data items to the HD 504 based on the control of the CPU 501. Furthermore, the first server 5 includes, for example, a media drive 507 that controls reading of data from and writing (storing) of the data to recording media 506, such as a flash memory. Furthermore, the first server 5 includes, for example, an output apparatus, such as a display 508, that displays various information items including a cursor, a menu, a window, a character, an image, etc., and a network I/F 509 that performs data communications by using the network 9 (Fig. 1).

Further, the first server 5 includes a keyboard 511 that has multiple keys used for inputting a character, a number, various commands, etc., and an input apparatus such as a mouse 512 that is used for performing an operation such as selecting and executing the commands, selecting a processing target, or moving the cursor. Further, the first server 5 includes, for example, a CD-ROM drive 514 that controls reading various data items from and writing the various data items to a CD-ROM (Compact Disc Read Only Memory) 513 as an example of an attachable and detachable recording medium. Furthermore, the first server 5 includes a bus line 510, such as an address bus, a data bus, etc., used for electrically connecting the units to each other as illustrated in the figure.

### <<Functional structure example>>

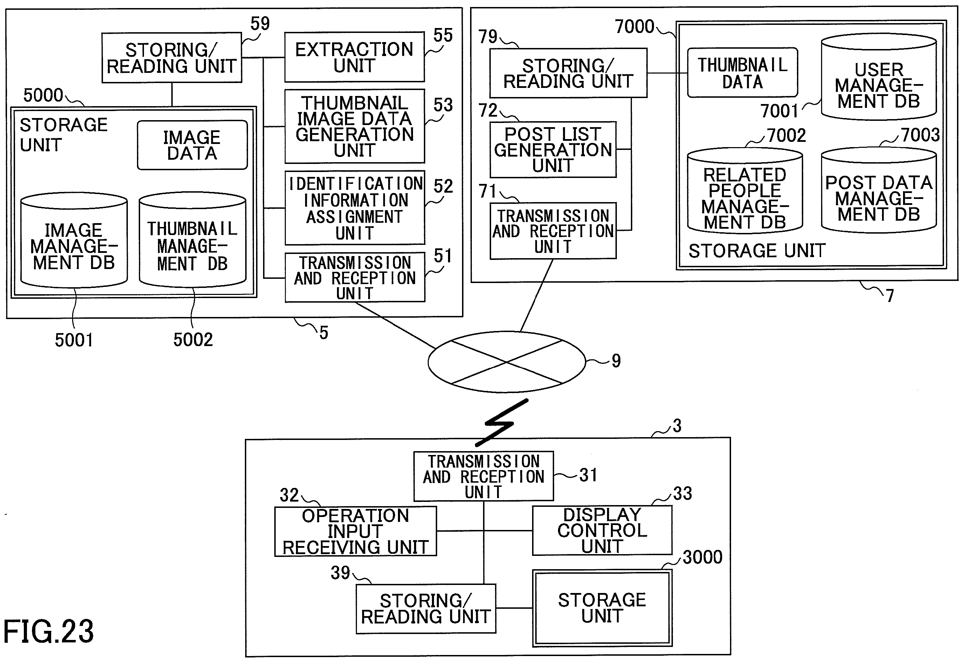

Fig. 23 is a functional block diagram illustrating an example of a functional structure of an image management system according to an embodiment of the present invention. As illustrated in the figure, the communication terminal 3 includes a transmission and reception unit 31, an operation input receiving unit 32, a display control unit 33, and storing/reading unit 39. These units are realized by, for example, the CPU 301 (Fig. 21). Further, the communication terminal 3 includes a storage unit 3000. The storage unit 3000 is realized by the ROM 302 (Fig. 21), the RAM 303 (Fig. 21), etc.

The communication terminal 3 transmits and receives data to and from an external apparatus such as the first server 5, the second server 7, etc., by using the transmission and reception unit 31 via the network 9.

The operation input receiving unit 32 is realized by, for example, the touch panel 316 (Fig. 21) and the CPU 301 (Fig. 21), and receives various operations of a user.

The display control unit 33 is realized by the CPU 301, and performs control of displaying an image, etc., on the display 315 (Fig. 21).

The storing/reading unit 39 stores various data items in the storage unit 3000. Further, the storing/reading unit 39 reads the various data items from the storage unit 3000.

The first server 5 includes a transmission and reception unit 51, an identification information assignment unit 52, a thumbnail image data generation unit 53, an extraction unit 55, and a storing/reading unit 59. These units are realized by, for example, the CPU 501 (Fig. 22). Further, the first server 5 includes a storage unit 5000. The storage unit 5000 is realized by the ROM 502 (Fig. 22), the HD 504 (Fig. 22), etc.

### (Image management table example)

The following table (Table 1) illustrates an example of an image management table. The image management table illustrated in the following table (Table 1) is an example in which a user ID for identifying a user, an image ID for identifying image data, and a file name of the image data are associated with each other, and the associated result is managed (maintained). It should be noted that the user ID is an example of user identification information enabled to uniquely identify a user. Further, the user identification information is, for example, a service use number, an employee number, a student number, a national citizen number, or the like. Further, the image ID is an example of image identification information.

**[Table 1]**

| Image management table | | |
|---|---|---|
| User ID | Image ID | File name of image data |
| u100001 | au1415ifauy | au1415ifauy.jpg |
| u100002 | au1416ifauy | au1416ifauy.jpg |
| · | · | · |
| · | · | · |
| · | · | · |

### (Thumbnail management table example)

The following table (Table 2) illustrates an example of a thumbnail management table. The thumbnail management table illustrated in the following table (Table 2) is an example in which a thumbnail ID for identifying a thumbnail image, an image ID, and a file name of the thumbnail data are associated with each other, and the associated result is managed (maintained). It should be noted that the thumbnail ID is an example of thumbnail identification information.

**[Table 2]**

| Thumbnail management table | | |
|---|---|---|
| Thumbnail ID | Image ID | File name of thumbnail image data |
| t0001 | au1415ifauy | au1415ifauy.thum.jpg |
| t0002 | au1416ifauy | au1416ifauy.thum.jpg |
| · | · | · |
| · | · | · |
| · | · | · |

Referring back to Fig. 23, the transmission and reception unit 51 is realized by the network I/F 509 (Fig. 22), the CPU 501 (Fig. 22), etc. The first server 5 transmits and receives data to and from an external apparatus such as the communication terminal 3, the second server 7, etc., by using the transmission and reception unit 51 via the network 9.

The identification information assignment unit 52 is realized by the CPU 501. The first server 5 manages (stores and maintains) data including Mercator images, etc., received by the transmission and reception unit 51. Specifically, the identification information assignment unit 52 assigns an image ID to the image data, and includes the image ID in a header part, etc., of the image data. Further, the identification information assignment unit 52 assigns a thumbnail ID to thumbnail image data generated by the thumbnail image data generation unit 53, and includes the thumbnail ID in a header part, etc., of the thumbnail image data.

The thumbnail image data generation unit 53 is realized by the CPU 501. The thumbnail image data generation unit 53 generates the thumbnail image data from a predetermined area in the image data based on the image data received by the transmission and reception unit 51 and the parameter included in the image data.

The extraction unit 55 is realized by the CPU 501. The extraction unit 55 identifies the image data indicated by the image ID data, etc., received by the transmission and reception unit 51, and extracts an area of a part from the identified image data.

The storing/reading unit 59 stores various data items in the storage unit 5000. Further, the storing/reading unit 59 reads the various data items from the storage unit 5000.

The second server 7 includes a transmission and reception unit 71, a post list generation unit 72, and a storing/reading unit 79. These units are realized by, for example, the CPU 501 (Fig. 22). Further, the second server 7 includes a storage unit 7000. The storage unit 7000 is realized by the ROM 502 (Fig. 22), the HD 504 (Fig. 22), etc.

### (User management table example)

The following table (Table 3) illustrates an example of a user management table. The user management table illustrated in the following table (Table 3) is an example in which a user ID, a password used for user authentication, a user image indicating the user's image, and user personal information indicating the user's name, etc., are associated with each other, and the associated result is managed (stored and maintained).

**[Table 3]**

| User management table | | | |
|---|---|---|---|
| User ID | Password | User image | User personal information |
| u100001 | up00001 | u100001.jpg | James, ... |
| u100002 | up00002 | u100002.jpg | Kurt, ... |
| · | · | · | · |
| · | · | · | · |
| · | · | · | · |

### (Related people management table example)

The following table (Table 4) illustrates an example of a related people management table. The related people management table illustrated in the following table (Table 4) is an example in which, for each user ID identifying a registering person (the first user USER A in Fig. 1), a user ID identifying a person related to the registering person (the second user USER B, etc., illustrated in Fig. 1) is associated with the user ID identifying the registering person, and the associated result is managed (stored and maintained). It should be noted that the related people are, for example, a friend, a family, or colleagues at work of the registering person.

**[Table 4]**

| Related people management table | |
|---|---|
| User ID of registering person | User ID of related people |
| u100001 | u100002, u100003, ... |
| u100002 | u100001, u100003, ... |
| · | · |
| · | · |
| · | · |

### (Post data management table example)

The following table (Table 5) illustrates an example of a post data management table. The post data management table illustrated in the following table (Table 5) is an example in which, for each user ID, a file name of the thumbnail image data and a comment posted by the user are associated with the user ID, and the associated result is managed (stored and maintained).

**[Table 5]**

| Post data management table | | |
|---|---|---|
| User ID | File name of thumbnail image data | Comment |
| u10001 | au1415ifauy.thum.jpg | Image of first building |
| u10002 | au1416ifauy.thum.jpg | Image of second building |
| · | · | · |
| · | · | · |
| · | · | · |

The transmission and reception unit 71 is realized by the network I/F 509 (Fig. 22) and the CPU 501, and transmits data to and receives data from the communication terminal 3 or the first server 5 via the network 9.

The post list generation unit 72 is realized by the CPU 501, and generates a display screen 3200 illustrated in Fig. 18, in a list format, or the like, based on the post data management table.

The storing/reading unit 79 stores various data items including the image data, etc., in the storage unit 7000. Further, the storing/reading unit 79 reads the various data items including the image data, etc., from the storage unit 7000.

### <<Upload example>>

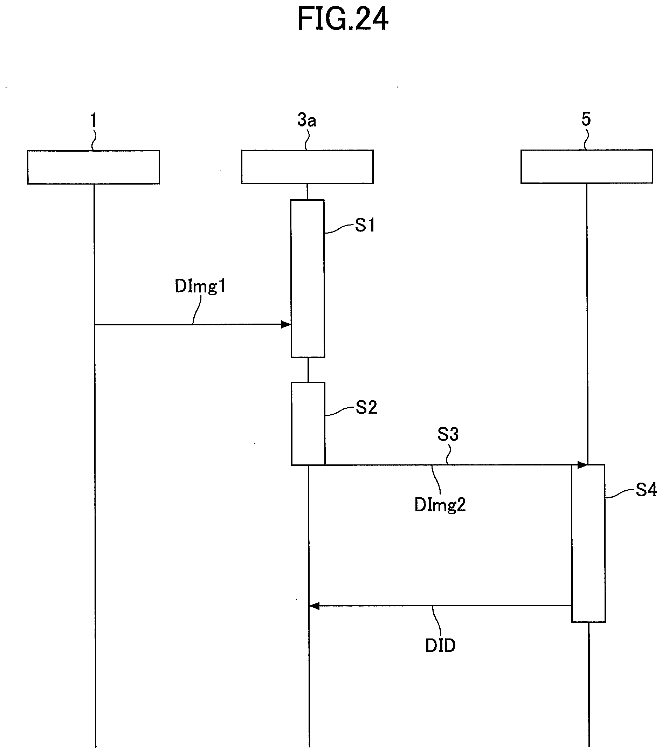

Fig. 24 is a sequence diagram illustrating an example of processes of uploading, etc., by an image management system according to an embodiment of the present invention. It should be noted that, in Fig. 24, a process that is the same as in Fig. 7 will be described by having the same numerical reference given. Further, Fig. 24 illustrates an example in which, similar to Fig. 7, the first user USER A is a registering person who registers an image, and, of all processes illustrated in Fig. 7, processes from registration by the first user USER A to generation of thumbnail image data will be described.

For example, the communication terminal 3, the first server 5, and the second server 7 perform HTTP communications according to Hypertext Transfer Protocol (HTTP). In this example, the first communication terminal 3a is a HTTP client, and the first server 5 and the second server 7 are each HTTP servers.

In step S1, in the first communication terminal 3a, an operation of selecting the image for sharing selection illustrated in Fig. 6, etc., is performed by the first user USER A (Fig. 1). Next, the first communication terminal 3a obtains each of the hemispherical images DImg1 illustrated in Fig. 4A and Fig. 4B from the imaging apparatus 1 based on the operation.

In step S2, first, the first communication terminal 3a generates image data DImg2 such as a Mercator image illustrated in Fig. 4C, a full spherical panoramic image illustrated in Fig. 8, etc., based on the hemispherical images DImg1.

Next, the first communication terminal 3a displays the image data DImg2. With respect to the above, the first user USER A performs an operation that determines a predetermined area, of the full spherical panoramic image, that will become a thumbnail image by displaying a portion that will become the thumbnail image as shown in Fig. 16, etc.

Next, the first communication terminal 3a calculates each of the values of the parameters included in the parameter Par illustrated in Fig. 9 based on the determined predetermined area. Further, the first communication terminal 3a generates the parameters illustrated in Fig. 9 based on the calculated values of the parameters.

In step S3, the first communication terminal 3a transmits the image data DImg2 including the parameter Par to the first server 5 based on an operation by the first user USER A. The transmission of the image data DImg2 from the first communication terminal 3a to the first server 5 serves as a registration request, that is, as an upload to the first server 5. Further, at the time of the upload, or, in advance to the upload, the first communication terminal 3a transmits a user ID of the first user USER A to the first server 5.

In step S4, first, the first server 5 generates image ID data DID in order to manage (store and maintain) the image data DImg2 received in step S3. When the image ID data DID is generated and associated with the image data DImg2 as illustrated in the above table (Table 1), the first server 5 is enabled to identify the image data DImg2 from (based on) the image ID data DID.

Next, in step S4, the first server 5 generates thumbnail image data DImg3 of the image data DImg2. Specifically, in the image data DImg2, parameters illustrated in Fig. 11 to Fig. 14 are included, and thus, the first server 5 is enabled to generate the thumbnail image data DImg3 by cutting out a part from the image data DImg2 based on the parameters.

Further, the thumbnail image data DImg3 is generated with a predetermined shape such as a square as illustrated in Fig. 18, etc. Specifically, a display area is determined based on the received parameters. Next, the first server 5 generates the thumbnail image data DImg3 indicating the display area with a predetermined size. According to the above arrangement, the first server 5 is enabled to generate the thumbnail image data DImg3 including the range determined in Fig. 16 with a length of the long side LS. In other words, the thumbnail image data DImg3 corresponding to the long side LS becomes an image sufficiently indicating the range determined in Fig. 16.

As described above, the image management system 200 is enabled to perform flexible image processing such as generating a thumbnail image with a predetermined shape.

It should be noted that, in the case where the registration is completed, the first server 5 may report the same to the first communication terminal 3a. For example, as illustrated in the figure, the first server 5 report to the first user USER A that the registration is completed by transmitting the image ID data DID, etc., to the first communication terminal 3a. In this case, the first communication terminal 3a manages (stores and maintains) the Image ID by using the storage unit 3000 (Fig. 23).

Further, as illustrated in the above table (Table 2), the first server 5 may generate a thumbnail ID for identifying the thumbnail image data DImg3. It should be noted that the thumbnail ID and the image ID may be included as the header data in the image data DImg2 or the thumbnail image data DImg3. Further, for example, in the case of transmitting the thumbnail image data DImg3, the thumbnail ID and the image ID may be included and transmitted as the header data in the thumbnail image data DImg3, or may be transmitted separately. Furthermore, any one of or both of the thumbnail ID and the image ID may be transmitted. In the following, an example will be described in which the image ID is transmitted.

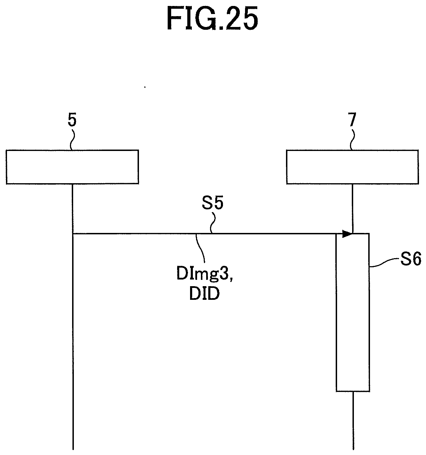

Fig. 25 is a sequence diagram illustrating an example of a process for uploading thumbnail image data to a second server 7. For example, the generated thumbnail image data DImg3 is used as illustrated in Fig. 25. It should be noted that, in Fig. 25, a process that is the same as in Fig. 7 will be described by having the same numerical reference given.

In step S5, the server 5 transmits the thumbnail image data DImg3 and the image ID data DID to a second server 7. For example, step S5 is performed when there is a post request by the first user USER A. Further, in step S5, the first server 5 may transmit the comment, the user ID, etc., illustrated in the above table (Table 5) together with, or, before or after, the transmission of the image ID data DID, etc.

In step S6, the second server 7 manages (stores and maintains) the thumbnail image data DImg3, etc., as illustrated in, for example, the above table (Table 5).

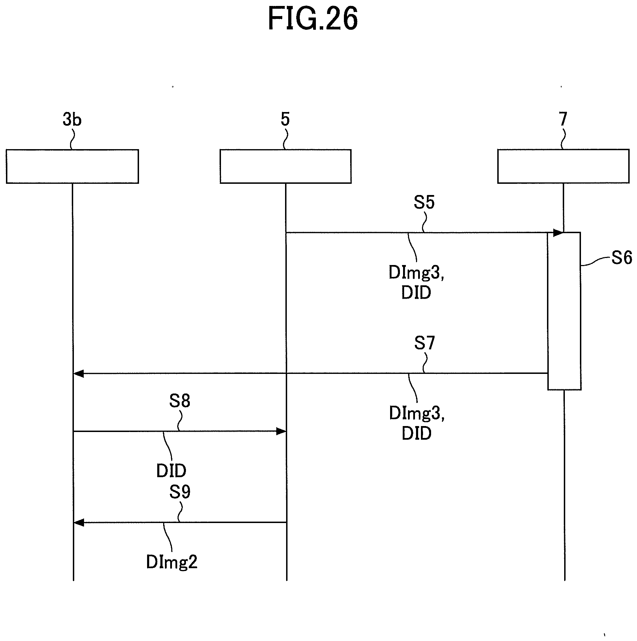

Fig. 26 is a sequence diagram illustrating an example of a process of downloading to the second communication terminal 3b. For example, the thumbnail image data DImg3, downloaded as illustrated in Fig. 25, is used as illustrated in Fig. 26. It should be noted that, in Fig. 26, a process that is the same as in Fig. 7 will be described by having the same numerical reference given.

For example, in the same way as in Fig. 7, an example will be described in which the second user USER B is connected to the second server 7. It should be noted that the second user USER B performs an operation such as what is termed as "login" when connecting to, or before connecting to, the second server 7. Specifically, the second user USER B enters a user ID, a password, etc., of the second user USER B. With respect to the above operations, the second server 7 performs what is termed as "authentication". Next, the second server 7 searches the above table (Table 4) for the user ID of the authenticated second user USER B, and identifies a related person (related people).

Next, the second server 7 generates, for example, a post list screen. Specifically, the second server 7 generates the display screen 3200, etc., illustrated in Fig. 18. In the display screen 3200, according to the process illustrated in Fig. 24, the data is displayed that is related to the first user USER A who has performed the registration.

In step S7, the second server 7 transmits the post list screen including the thumbnail image data DImg3 and the image ID data DID to the second communication terminal 3b. Next, the second communication terminal 3b displays the display screen 3200 including the thumbnail image data DImg3. With respect to the above operations, in the case where there is an image that the second user USER B wants to download in the display screen 3200 displayed by the second communication terminal 3b, the second user USER B performs an operation of selecting the image to be downloaded.

For example, it is assumed that the second user USER B selects the image uploaded by the post of the first user USER A according to the process illustrated in Fig. 24. In this case, the second user USER B selects a thumbnail image indicated by the thumbnail image data DImg3 posted by the first user USER A.

In step S8, the second communication terminal 3b transmits the image ID data DID to the first server 5. It should be noted that the image ID data DID corresponds to the thumbnail image data DImg3 selected in step S7. It should be noted that the image ID data DID may be transmitted to the first server 5 via, for example, the second server 7, or the like.

In step S9, the first server 5 transmits the image data DImg2 identified by the image ID data DID to the second communication terminal 3b. With the above operations, the second user USER B is enabled to see an image indicated by the thumbnail image data DImg3 by using the second communication terminal 3b.

It should be noted that the first server 5 transmits the image data DImg2 to be transmitted to the second communication terminal 3b by extracting a predetermined area specified by parameters.

Further, an image that is initially displayed by the second communication terminal 3b, that is, what is termed as an "initial screen" (also referred to as a "1stView"), can be set by the first user USER A. In the initial screen, for example, an image is displayed that is specified by the parameter Par illustrated in Fig. 9. In other words, it is possible to set an initial screen to be displayed at the time of downloading of the image according to the parameter Par.

It should be noted that all or a part of the processes according to an embodiment of the present invention may be realized by programs to be executed by a computer described by using a legacy programming language such as Assembler, C, C++, C#, Java (registered trademark), etc., or an object oriented programming language. In other words, the programs are computer programs used for causing a computer, such as an information processing apparatus including an image management apparatus, etc., or, an information processing apparatus, etc., included in an information processing system, to execute various processes.

Further, the programs may be stored and distributed in a computer readable recording medium such as a ROM or an EEPROM (Electrical Erasable Programmable ROM). Furthermore, the recording medium may be an EPROM (Erasable Programmable ROM), a flash memory, a flexible disk, a CD-ROM, a CD-RW, a DVD-ROM, a DVD-RAM, a DVD-RW, a Blu-ray Disc, a SD (registered trademark) card, a MO, etc. Furthermore, the programs may be distributed through a telecommunication line.

Further, the image management system may include two or more information processing apparatuses connected to each other via a network, etc., and all or a part of various processes may be performed by a plurality of information processing apparatuses in a distributed manner, a parallel manner, or a redundant manner. Further, in the image management system, the processes may be performed by an apparatus other than the described apparatuses.

As described above, preferable embodiments according to the present invention have been described. An embodiment according to the present invention is not limited to the above described embodiments. Various modifications and variations may be possible within the range of the subject matter of the present invention recited in the claims.

The present application is based on and claims the benefit of priority of Japanese Priority Application No. 2015-144098 filed on July 21, 2015, the entire contents of which are hereby incorporated herein by reference.

### [DESCRIPTION OF THE REFERENCE NUMERALS]

3a first communication terminal
3b second communication terminal
5 first server
7 second server

## Claims

1. An image management system including a communication terminal and an image management apparatus that communicates with the communication terminal via a network, the image management system comprising:
a reception unit configured to receive image data including a parameter that specifies an area of a part of an image; and
a thumbnail image data generation unit configured to generate thumbnail image data with a predetermined shape from an image of the area specified by the parameter.

2. The image management system according to claim 1, wherein the image data is Mercator image data that can be displayed as a full spherical panoramic image.

3. The image management system according to claim 1 or 2, wherein the parameter indicates a direction, an elevation angle, a field of view, and a position of a virtual camera that indicate the area.

4. The image management system according to claim 3, wherein a rotation amount of the virtual camera in a Yaw direction is specified by the direction indicated by the parameter.

5. The image management system according to claim 3, wherein a rotation amount of the virtual camera in a Pitch direction is specified by the elevation angle indicated by the parameter.

6. The image management system according to claim 3, wherein a field of view of the virtual camera is specified by the field of view indicated by the parameter.

7. The image management system according to claim 3, wherein a position of the virtual camera on an optical axis is specified by the position indicated by the parameter.

8. The image management system according to any one of claims 1 to 7, wherein the predetermined shape is a square based on a long side of a display included in the communication terminal.

9. An image management method performed by an image management system that includes a communication terminal and an image management apparatus that communicates with the communication terminal via a network, the image management method comprising:
receiving, by the image management system, image data including a parameter that specifies an area of a part of an image; and
generating, by the image management system, thumbnail image data with a predetermined shape from an image of the area specified by the parameter.

10. A program that causes a computer to perform the steps included in the method according to claim 9.
